Europäisches Patentamt

European Patent Office

Office européen des brevets

(11) Numéro de publication : **0 336 799 B1**

## (12) FASCICULE DE BREVET EUROPEEN

(45) Date de publication du fascicule du brevet :
**12.08.92 Bulletin 92/33**

(51) Int. Cl.⁵ : **B66C 1/02,** B65G 47/91

(21) Numéro de dépôt : **89400719.4**

(22) Date de dépôt : **15.03.89**

(54) **Dispositif de levage à ventouses.**

(30) Priorité : **18.03.88 FR 8803565**

(43) Date de publication de la demande :
**11.10.89 Bulletin 89/41**

(45) Mention de la délivrance du brevet :
**12.08.92 Bulletin 92/33**

(84) Etats contractants désignés :
**BE CH DE FR IT LI**

(56) Documents cités :
**AT-B- 347 076
DE-A- 3 016 346
DE-A- 3 018 082
Patent Abstracts of Japan, vol. 10, no. 70
(M-462)(2127) 19 mars 1986, JP-A-60215108
(Shirou Fukami) 28.10.1985**

(73) Titulaire : **SOCIETE D'APPLICATION DE
PROCEDES ELECTRONIQUES ET
MECANIQUES
Zone Industrielle de Beaucouzé
F-49000 Angers (FR)**

(72) Inventeur : **Allard, Patrick
3, rue du Dauphiné
F-49000 Angers (FR)**

(74) Mandataire : **Bouju, André
Cabinet Bouju Derambure (Bugnion) S.A. B.P.
6250
F-75818 Paris Cédex 17 (FR)**

EP 0 336 799 B1

Jouve, 18, rue Saint-Denis, 75001 PARIS

## Description

La présente invention concerne un dispositif pour soulever une charge au moyen de plusieurs ventouses, reliées à une source commune de dépression.

L'invention s'applique en particulier à la manutention de tôles en tous matériaux, mais peut s'appliquer aussi pour celle de caisses ou d'autres produits comportant des faces planes ou courbes.

Le dispositif selon l'invention vise à résoudre le problème d'effectuer la préhension de produits de dimensions diverses sans réglage préalable et permet ainsi par exemple d'approvisionner une cisaille, en tôles de formats divers prélevées en sortie de magasin.

Il est connu par exemple selon le DE-A-30 18 082 d'utiliser des ventouses reliées à un système d'aspiration, le vide produit créant l'adhérence sur le produit à soulever. Il est également connu d'utiliser simultanément un certain nombre de ventouses fixées à un même manipulateur ou palonnier pour soulever des produits de grande surface, éventuellement souples ou bombés.

Lorsque le produit est plus petit que le palonnier, certaines ventouses sont inutilisées et peuvent gêner la manipulation du produit, tout en causant une perte de vide, c'est-à-dire une entrée d'air atmosphérique gênante.

Le but de la présente invention est de remédier à ces inconvénients.

Suivant l'invention, le dispositif pour soulever une charge au moyen d'une série de ventouses pouvant être appliquées sur une face supérieure de la charge et soumises simultanément à une dépression issue d'une source commune de vide, dans lequel chacune des ventouses est portée par un moyen de rétraction de celle-ci loin de la charge, est caractérisé en ce que chacun de ces moyens de rétraction est agencé pour écarter individuellement de la charge toute ventouse qui n'y adhère pas après mise sous vide.

De préférence, le moyen de rétraction comporte un tube coulissant, sensiblement vertical, guidé dans le palonnier, et qui sert simultanément de conduit d'aspiration reliant la ventouse à une source de vide, c'est-à-dire d'aspiration de l'atmosphère, au moyen d'une canalisation souple ou articulée.

Selon un perfectionnement de l'invention, ce tube contient lui-même un clapet coulissant et un siège en partie haute, de sorte qu'un excès de débit qui apparaît dans une ventouse inactive entraîne le clapet sur le siège en obturant le tube et en supprimant la perte de vide.

Le moyen de rétraction comporte, pour chacune des ventouses, un organe tel qu'un ressort ou un vérin, susceptible de soulever celle-ci en la rapprochant du palonnier qui la supporte.

D'autres particularités et avantages de l'invention apparaîtront encore dans la description ci-après.

Aux dessins annexés, donnés à titre d'exemples non limitatifs :
– la figure 1 est une vue en coupe longitudinale d'un vérin de rétraction utilisable dans un dispositif de levage conforme à l'invention,
– la figure 2 est une vue schématique en perspective d'un dispositif de levage comprenant plusieurs vérins saisissant une tôle, ce schéma montrant les circuits de commande de ces vérins,
– la figure 3 est une vue en coupe longitudinale d'une version simplifiée de moyen de rétraction,
– les figures 4 à 7 sont des vues en coupe longitudinale d'une autre version du dispositif de levage dans diverses positions de fonctionnement.

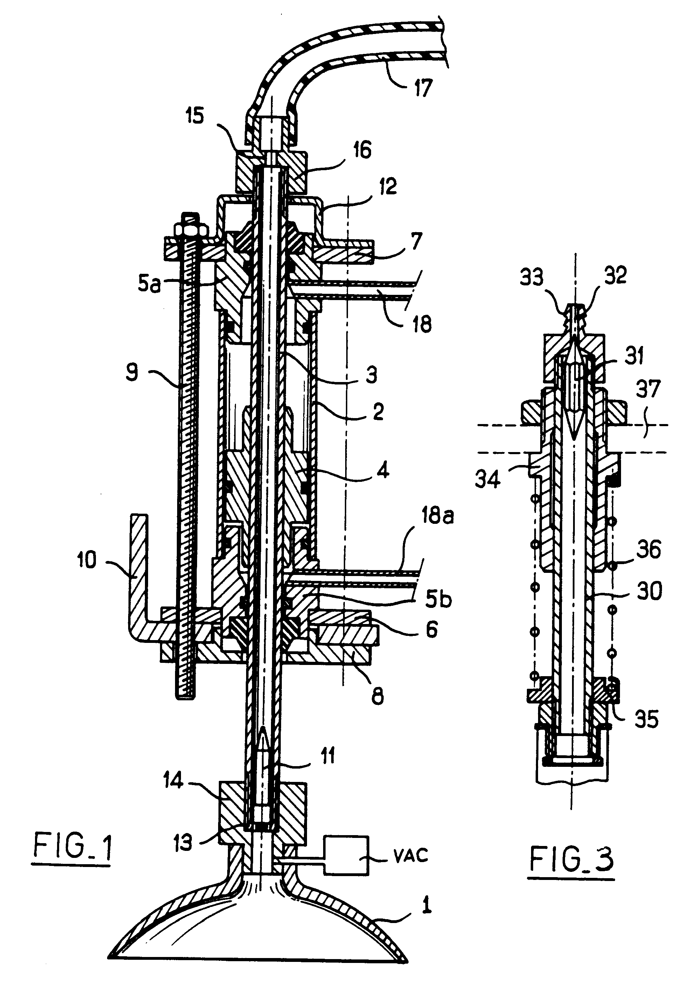

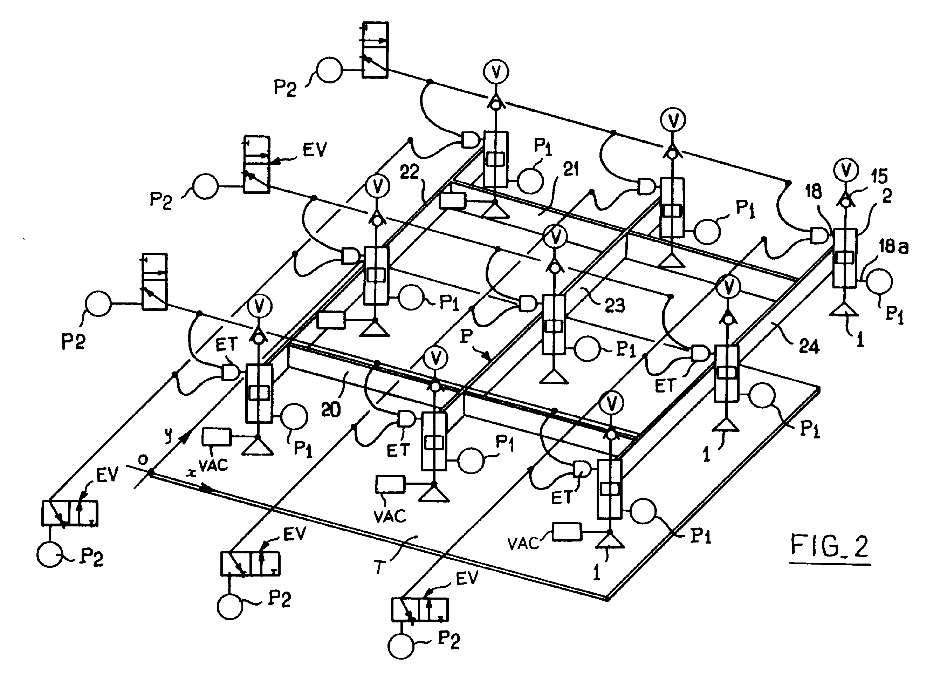

La figure 1 représente une ventouse 1 en caoutchouc souple, avec un vérin de rétraction dont le corps 2, les fonds 5a, 5b haut et bas, les plaques inférieure 6 et supérieure 7 ainsi qu'une contreplaque 8 sont enserrés par des tirants tels que 9. L'ensemble retient aussi une équerre de fixation 10, pour sa fixation à des traverses qui constituent le palonnier, visible en figure 2.

Le vérin comporte aussi une tige 3 portant un piston 4, qui constitue le coulisseau du vérin.

Cette tige est ici un tube creux, portant à son extrémité inférieure un tamis 13 retenu par l'embout 14 lequel est vissé sur le tube 3 et supporte la ventouse 1, collée par exemple sur lui.

Un clapet 11 est susceptible de coulisser dans le tube 3 entre le tamis 13 et un siège rétréci 15 formé dans l'embout 16 vissé sur l'extrémité supérieure du tube 3, et sur lequel se fixe le tube 17 souple ou articulé, relié à une source d'aspiration dite source de vide.

Les fonds 5a, 5b portent chacun une conduite de fluide 18, 18a pour alimenter le corps 2 de part et d'autre du piston 4.

La conduite inférieure 18a est reliée en permanence à une source de pression non figurée, à une pression constante P1, qui est par exemple égale à 2 bars.

Un premier mode de fonctionnement est réalisable en laissant à l'atmosphère ambiante la conduite supérieure 18. Dans ces conditions, la partie mobile 3, 4 du vérin de rétraction tend à remonter sous l'effet de la pression P1.

Lorsque l'on saisit une tôle sous la ventouse 1 et que l'on soulève l'ensemble par l'équerre 10, le poids de la tôle exerce un effort supérieur à celui de rétraction, et la partie mobile 3, 4 du vérin descend jusqu'à ce que l'embout 16 bute sur une butée protectrice 12 appuyée sur la plaque supérieure 7. Par contre, les autres ventouses du palonnier restent en position haute, et donc rétractées ou éclipsées au voisinage de la structure de ce palonnier. Leur débit est annulé par la remontée du clapet 11 contre le siège 15.

Elles ne gênent pas la manutention ultérieure, par exemple une mise en place sur une machine à cisailler. La dépose suivant cette mise en place se fait par remise à la pression atmosphérique des conduits tels que 17 et les ventouses précédemment actives reprennent aussitôt leur position rétractée.

La figure 2 est un schéma d'un palonnier P équipé de vérins décrits précédemment à tiges 3 verticales et utilisant un système pneumatique d'abaissement des ventouses 1, ce qui permet de saisir des tôles de toutes épaisseurs sans nécessiter de réglage de la pression P1 de rétraction.

La structure comporte ici deux traverses 20 et 21 reliant trois longerons 22, 23 et 24, chacun de ceux-ci portant trois vérins tels que 2 avec leurs ventouses telles que 1.

Les conduites inférieures 18a sont à la pression P1 comme précédemment. Les conduites supérieures 18 sont reliées à une source de pression P2 plus élevée, par exemple de 5 bars, par des lignes distributrices parallèles aux lignes perpendiculaires selon lesquelles les vérins sont alignés, soient des rangées selon Ox et des colonnes selon Oy.

On note que l'on saisit toujours les tôles T le long de la rangée Ox et de la colonne Oy qui bordent un des angles du palonnier P.

Les tôles T étant toujours de format rectangulaire, les seules ventouses 1 en prise sont celles situées à l'intérieur du rectangle délimité par les ventouses 1 en prise côté Ox et par les ventouses 1 en prise côté Oy.

Toutes les autres ne sont donc pas en prise, c'est-à-dire sont inactives et doivent être escamotées.

Pour éviter de multiplier les distributeurs servant au maintien des vérins en position basse, on installe des électrovannes Ev sur les deux mêmes lignes de référence Ox et Oy, à raison d'une par rangée et d'une par colonne. Chacune est en dépendance d'un vacuostat VAC qui, en phase de levage, détermine sa mise au repos, ou fermeture, lorsqu'une ventouse est inactive.

Ce vacuostat détecte l'absence de vide et interrompt la connexion des ventouses correspondantes à la source de pression P2. Les réseaux de distribution se croisent à chaque vérin. Ceux-ci sont alimentés par une cellule ET. Seuls les vérins alimentés à la fois par deux électrovannes EV maintiennent la pression dans la chambre supérieure du vérin. Il serait trop onéreux de connecter un vacuostat VAC sur chaque ventouse 1. Seules les deux lignes extérieures de ventouses 1 situées le long des axes de référence Ox et Oy sont munies d'un vacuostat 4 associé à une électrovanne EV. Chaque rangée ou colonne située en dehors de la tôle T en prise a son électrovanne EV mise au repos et par le fonctionnement de la cellule ET, les vérins 2 concernés sont escamotés.

Grâce à ce dispositif, seules les ventouses 1 en prise avec la tôle T sont en position basse et reliées au circuit de vide.

Pour effectuer une dépose, toutes les ventouses 1 sont reliées par un distributeur "dépose" avec la pression atmosphérique, les clapets 11 des ventouses inactives retombent et les vérins 2 des ventouses actives s'escamotent automatiquement par la pression d'air constante appliquée à leur partie inférieure.

Toutes les électrovannes EV de descente des vérins étant au repos, il n'y a plus de pression à leur partie supérieure.

Cette disposition permet de dégager la tôle T ou de déplacer le palonnier P sans effectuer de mouvement vertical.

Une prise s'effectue en excitant les électrovannes d'air qui alimentent les chambres supérieures de vérins.

Tous les vérins viennent au contact de la tôle ou à côté de celle-ci.

Le distributeur de vide est mis en position "prise" et les circuits des vacuostats mis en action.

La sélection des points de préhension est automatique et le relevage des vérins est effectué dès le relâchement des électrovannes correspondant aux lignes de ventouses qui ne sont pas en prise avec les lignes détectées, comme indiqué plus haut, par les vacuostats VAC associés aux ventouses des lignes latérales Ox et Oy.

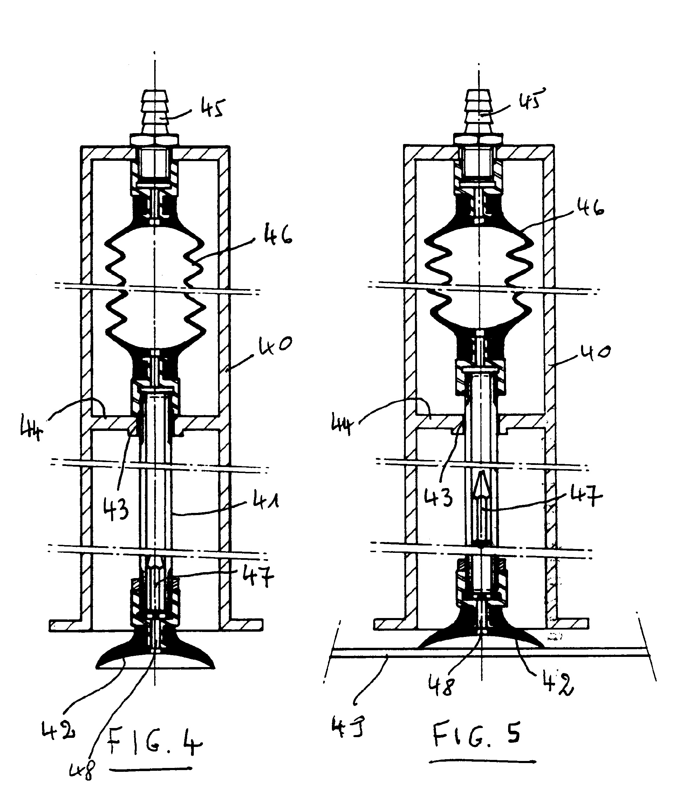

La figure 3 est une version simplifiée d'un dispositif pouvant être utilisé à la place des vérins 2 que l'on vient de décrire.

Ce dispositif comporte comme le précédent, un tube 30 à l'intérieur duquel est monté coulissant un clapet 31 susceptible d'obturer un siège 32 ménagé à la partie supérieure du dispositif.

La partie inférieure du tube 30 est destinée à être raccordée à une ventouse identique à celle précédemment décrite.

La partie supérieure du tube 30 comporte un embout 33 qui est destiné à être raccordé à une source de vide.

Le tube 30 est monté coulissant dans un corps 34 solidaire du palonnier.

Entre ce corps 34 et une rondelle d'appui 35 solidaire de l'extrémité inférieure du tube 30 est intercalé un ressort hélicoïdal 36 qui entoure ce tube 30, 36. Le ressort 36 est fixé à ses extrémités opposées à la rondelle 35 et au corps 34 pour pouvoir travailler en élongation.

Ce ressort 36 joue le même rôle que la pression P1 du vérin précédemment décrit : il tend à faire remonter le tube 30.

Lorsqu'on saisit une tôle sous la ventouse et que l'on soulève l'ensemble (en tirant sur une paroi 37 fixée au corps 34), le poids de la tôle exerce un effort supérieur à celui du ressort et le tube 30 descend, vers la position montrée sur la figure 3.

Dans la réalisation des figures 4 à 7, le dispositif de levage comprend un corps cylindrique 40 à l'intérieur duquel est monté coulissant un tube axial 41 dont l'extrémité inférieure porte la ventouse 42. Ce tube 41 est guidé axialement dans un alésage 43 pratiqué dans une cloison transversale 44. A l'opposé de la ventouse 42, le corps 40 comporte un embout 45 destiné à être raccordé à une source de vide.

Cet embout 45 communique avec un soufflet 46 logé à l'intérieur du corps 40 qui est lui-même raccordé à l'extrémité du tube 41 opposée au soufflet 42.

A l'intérieur du tube 41 est engagé de façon coulissante un clapet 47.

Le fonctionnement de ce dispositif est le suivant :

Au repos (voir figure 4), le clapet 47 est en position inférieure, en appui contre l'ouverture centrale 48 de la ventouse 42.

En fonctionnement, trois cas peuvent se présenter :

1er cas (voir figure 5).

La ventouse 42 prend appui sur un produit "étanche" lourd 49. Du fait de l'aspiration créée dans le tube 41, le soufflet 46 se rétracte et le tube 41 remonte légèrement, jusqu'à l'obtention d'un équilibre.

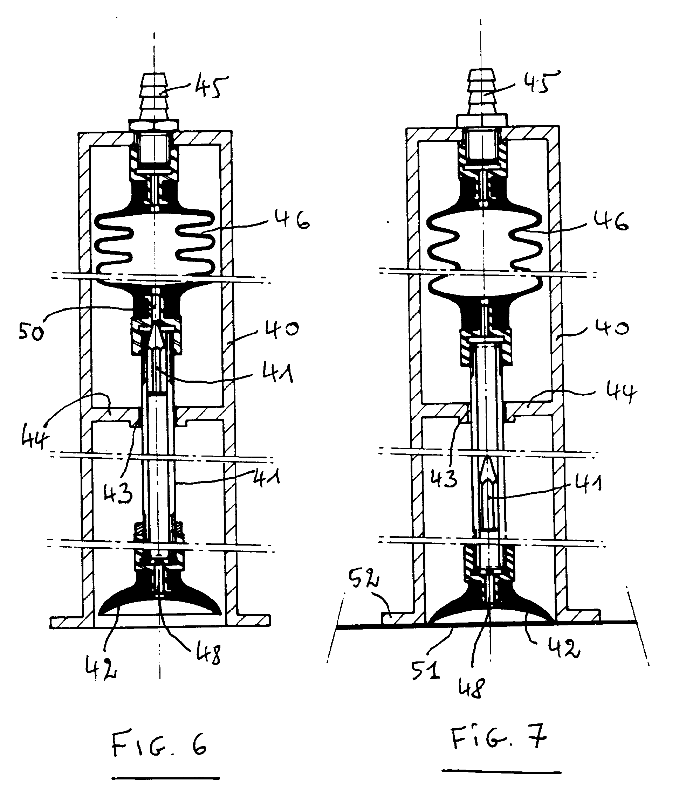

Dans le cas d'un produit "non étanche" ou réalisant une surface de contact incomplète avec la ventouse 42, le vide créé au niveau de la ventouse est insuffisant. Le clapet 47 (voir figure 6) remonte dans le tube 41 jusqu'à obturer entièrement le passage 50 entre le tube et le soufflet 46. De ce fait, ce soufflet 46 se rétracte entièrement et le tube 41 ainsi que la ventouse 42 remontent dans le corps 40.

Dans le cas d'un produit léger et "étanche" tel qu'une tôle (voir figure 7). Le clapet 47 remonte à l'intérieur du tube 41 jusqu'à une certaine position d'équilibre. Le soufflet 46 se rétracte partiellement sous l'effet de la dépression.

Le tube 41 et la ventouse 42 remontent jusqu'à ce que le produit 51 prenne appui avec le plan défini par l'extrémité inférieure 52 du corps 40.

Dans tous les cas, le lacher du produit est réalisé par rupture du vide ou par injection d'air comprimé dans le circuit.

Bien entendu, l'invention n'est pas limitée aux exemples de réalisation que l'on vient de décrire et on peut apporter à ceux-ci de nombreuses modifications sans sortir du cadre de l'invention.

Ainsi, les vérins à tige coulissante peuvent être commandés entièrement par un champ électromagnétique.

Par ailleurs, l'action du fluide sous pression P1 pourrait être remplacée par un ressort ou par un champ électromagnétique.

Tous autres moyens que ceux décrits pourraient être prévus pour écarter individuellement de la charge toute ventouse qui n'adhère pas à celle-ci après mise sous vide.

## Revendications

1. Dispositif pour soulever une charge au moyen d'une série de ventouses (1,42) pouvant être appliquées sur une face supérieure de la charge (T) et soumises simultanément à une dépression issue d'une source commune de vide, dans lequel chacune des ventouses (1, 42) est portée par un moyen de rétraction (3, 30, 41) de celle-ci éloigné de la charge (T), caractérisé en ce que chacun de ces moyens de rétraction est agencé pour écarter individuellement de la charge toute ventouse (1, 42) qui n'y adhère pas après mise sous vide.

2. Dispositif conforme à la revendication 1, caractérisé en ce que le moyen de rétraction comporte une tige coulissante (3, 30, 41).

3. Dispositif conforme à la revendication 2, caractérisé en ce que la tige (3, 30, 41) est un tube relié à la source de vide par un tube souple ou articulé (17).

4. Dispositif conforme à l'une des revendications 2 ou 3, caractérisé en ce que les tiges (3, 30, 41) sont sensiblement verticales.

5. Dispositif conforme à l'une des revendications 3 ou 4, caractérisé en ce que chaque tube contient un clapet coulissant (11, 31, 47) adapté pour fermer la communication avec la source de vide, lorsque la ventouse associée est inactive.

6. Dispositif conforme à l'une des revendications 2 à 5, caractérisé en ce que le moyen de rétraction comporte un ressort (36).

7. Dispositif conforme à la revendication 6, caractérisé en ce que le ressort (36) entoure la tige (30).

8. Dispositif conforme à l'une des revendications 2 à 7, caractérisé en ce que le moyen de rétraction comporte un vérin (2) actionné par une première source de fluide sous pression modérée (P1).

9. Dispositif conforme à la revendication 8, caractérisé en ce que chaque tige (3) constitue le coulisseau d'un vérin (2) concentrique à elle.

10. Dispositif conforme à l'une des revendications 8 ou 9, caractérisé en ce que le vérin (2) est connecté à une deuxième source de fluide à pression importante (P2) suffisante pour pousser le vérin vers la charge, des moyens étant prévus pour interrompre la connexion précitée pour les vérins de chacune des ventouses qui n'adhère pas à la charge.

11. Dispositif conforme à la revendication 10, caractérisé en ce que les moyens précités comprennent un vacuostat (VAC) lié à une ventouse, l'absence de vide détectée par celui-ci interrompant la connexion à la deuxième source de fluide sous pression.

12. Dispositif conforme à la revendication 11, caractérisé en ce que les ventouses (1) sont disposées aux croisements d'alignements, celles d'extrémité de ces alignements étant liées chacune à un vacuostat (VAC), l'absence de vide détecté par les vacuostats des extrémités de deux alignements interrompant la connexion du vérin situé au croisement de ces deux alignements.

13. Dispositif conforme à la revendication 12, caractérisé en ce que chacun des alignements est suivi par une ligne d'alimentation connectée par une vanne (EV) à la deuxième source (P2), et chacun des vérins est relié aux deux lignes correspondant aux deux alignements croisés sur lui, au moyen d'une cellule (ET) pneumatique n'admettant le fluide qu'en cas de connexion des deux lignes.

14. Dispositif conforme à l'une des revendications 1 à 5, caractérisé en ce que les moyens de rétraction comprennent un tube coulissant (41) relié et communiquant avec un soufflet (46) lui-même raccordé à une source de vide.

15. Dispositif conforme à la revendication 14, caractérisé en ce que le tube coulissant (41) et le soufflet (46) sont montés à l'intérieur d'un corps (40).

**Patentansprüche**

1. Vorrichtung zum Anheben einer Last mit einer Reihe von Saugern (1,42), die auf eine Oberfläche der Last (T) aufsetzbar und gleichzeitig mit einem von einer gemeinsamen Vakuumquelle erzeugten Unterdruck beaufschlagbar sind, in welchem jeder der Sauger (1,42) mit einer Rückziehvorrichtung (3,30,41) zum Zurückziehen von der Last (T) weggehalten ist, dadurch gekennzeichnet dass jede der Rückziehvorrichtungen zum individuellen Entfernen aller Sauger (1, 42) betätigt wird, die nicht an der Last nach dem Anlegen des Unterdrucks haften.

2. Vorrichtung nach Anspruch 1, dadurch gekennzeichnet, daß die Zurückziehvorrichtung eine verschiebbare Stange (3,30,41) aufweist.

3. Vorrichtung nach Anspruch 2, dadurch gekennzeichnet, daß die Stange (3,30,41) ein Rohr ist, das mit der Vakuumquelle über ein weiches oder gelenkiges Rohr (17) verbunden ist.

4. Vorrichtung nach Anspruch 2 oder 3, dadurch gekennzeichnet, daß die Stangen (3,30,41) im wesentlichen vertikal stehen.

5. Vorrichtung nach Anspruch 3 oder 4, dadurch gekennzeichnet, daß jedes Rohr ein gleitendes Ventilstück (11,31,47) zur Unterbrechung der Verbindung mit der Vakuumquelle aufweist, wenn der zugehörige Sauger inaktiv ist.

6. Vorrichtung nach einem der Ansprüche 2 bis 5, dadurch gekennzeichnet, daß die Rückziehvorrichtung eine Feder (36) aufweist.

7. Vorrichtung nach Anspruch 6, dadurch gekennzeichnet, daß die Feder (36) die Stange (30) umgibt.

8. Vorrichtung nach einem der Ansprüche 2 bis 7, dadurch gekennzeichnet, daß die Rückziehvorrichtung einen Stellantrieb (2) aufweist, der durch eine erste Fluidquelle mit geringem Überdruck (P1) betätigbar ist.

9. Vorrichtung nach Anspruch 8, dadurch gekennzeichnet, daß jede Stange (8) ein Gleitstück des Stellantriebs (2) bildet, das konzentrisch in dem Stellantrieb (2) angeordnet ist.

10. Vorrichtung nach Anspruch 8 oder 9, dadurch gekennzeichnet, daß der Stellantrieb mit einer zweiten Fluidquelle mit hohem Druck (P2) verbunden ist, der ausreicht, um den Stellantrieb gegen die Last zu drücken, wobei Mittel vorgesehen sind, die vorgenannte Verbindung für die Stellantriebe jedes Saugers zu unterbrechen, der nicht an der Last haftet.

11. Vorrichtung nach Anspruch 10, dadurch gekennzeichnet, daß die vorgenannten Mittel einen mit einem Sauger verbundenen Vacuostat (VAC) aufweisen und daß bei einer durch den Vacuostaten detektierten Abwesenheit des Unterdrucks die Verbindung mit der zweiten Druckfluidquelle unterbrochen wird.

12. Vorrichtung nach Anspruch 11, dadurch gekennzeichnet, daß die Sauger (1) an Kreuzungsstellen von Fluchtlinien angeordnet sind und daß die Sauger am Ende dieser Fluchtlinien wieder mit einem Vacuostat (VAC) verbunden sind und daß die Abwesenheit eines Vakuums, die durch die Vacuostaten an den Enden von beiden Fluchtlinien detektiert ist, die Verbindung mit dem Stellglied an der Kreuzungsstelle dieser beiden Fluchtlinien unterbricht.

13. Vorrichtung nach Anspruch 12, dadurch gekennzeichnet, daß jede der Fluchtlinien durch eine Versorgungsleitung fortgesetzt ist, die über ein Ventil (EV) mit der zweiten Fluidquelle (P2) verbunden ist und daß jedes der Stellglieder mit zwei Leitungen, die zu den beiden sich an ihm kreuzenden Fluchtlinien gehören, über eine pneumatische UND-Zelle verbunden ist, die das Fluid nur im Falle der Verbindung der beiden Leitungen durchläßt.

14. Vorrichtung nach einem der Ansprüche 1 bis 5, dadurch gekennzeichnet, daß die Rückziehvorrichtung ein verschiebbares Rohr (41) aufweist, das mit einem Blasebalg (46) verbunden ist und kommuniziert, der selbst an eine Vakuumquelle angeschlossen ist.

15. Vorrichtung nach Anspruch 14, dadurch gekennzeichnet, daß das verschiebbare Rohr (41) und der Blasebalg (46) im Innern eines Gehäuses (40) angeordnet sind.

**Claims**

1. Device for lifting a load by means of a series of suction cups (1, 42) which can be applied on a top face of the load (T) and subjected simultaneously to a negative pressure produced by a common vacuum source, in which each suction cup (1, 42) is carried by retraction means (3, 30, 41) for withdrawing this latter from the load (T), characterized in that each of these retraction means is so arranged as to move individually away from the load any suction cup (1, 42) which fails to adhere thereto after production of a vacuum.

2. Device in accordance with claim 1, characterized in that the retraction means include a sliding rod (3, 30, 41).

3. Device in accordance with claim 2, characterized in that the rod (3, 30, 41) is a tube connected to the vacuum source by a flexible or articulated tube (17).

4. Device in accordance with either claim 2 or claim 3, characterized in that the rods (3, 30, 41) are substantially vertical.

5. Device in accordance with claim 3 or claim 4, characterized in that each tube contains a sliding valve (11, 31, 47) adapted to close the communication with the vacuum source when the associated suction cup is inactive.

6. Device in accordance with one of claims 2 to 5, characterized in that the retraction means include a spring (36).

7. Device in accordance with claim 6, characterized in that the spring (36) surrounds the rod (30).

8. Device in accordance with one of claims 2 to 7, characterized in that the retraction means include a jack (2) actuated by a first source of fluid under moderate pressure (P1).

9. Device in accordance with claim 8, characterized in that each rod (3) constitutes the sliding member of a jack (2) which is concentric with this latter.

10. Device in accordance with either claim 8 or claim 9, characterized in that the jack (2) is connected to a second source of fluid under high pressure (P2) which is sufficient to thrust the jack towards the load, means being provided for interrupting the above-mentioned connection in the case of the jacks of each suction cup which fails to adhere to the load.

11. Device in accordance with claim 10, characterized in that the above-mentioned means include a vacuostat (VAC) connected to a suction cup, absence of vacuum detected by this latter being intended to interrupt the connection with the second source of fluid under pressure.

12. Device in accordance with claim 11, characterized in that the suction cups (1) are placed at the intersections of alignments, the end suction cups of these alignments being connected in each case to a vacuostat (VAC), absence of vacuum detected by the vacuostats of the ends of two alignments being intended to interrupt the connection of the jack located at the intersection of these two alignments.

13. Device in accordance with claim 12, characterized in that each alignment is followed by a supply line connected via a valve (EV) to the second source (P2) and each jack is connected to the two lines corresponding to the two alignments which intersect at said jack, by means of a pneumatic cell (ET) into which fluid is admitted only in the event of connection of the two lines.

14. Device in accordance with one of claims 1 to 5, characterized in that the retraction means include a sliding tube (41) connected to and communicating with a bellows element (46) which is in turn connected to a vacuum source.

15. Device in accordance with claim 14, characterized in that the sliding tube (41) and the bellows element (46) are mounted within a body (40).

FIG.1

VAC

FIG.3

FIG_2

EP 0 336 799 B1

FIG. 4

FIG. 5

FIG. 6

FIG. 7